# EUROPEAN PATENT SPECIFICATION

(11) **EP 3 923 735 B1**
(45) Date of publication and mention of the grant of the patent: **10.05.2023**
(21) Application number: 20700935.8
(22) Date of filing: 22.01.2020
(51) Int. Cl.: A23F 3/16, A23F 3/40, A23L 27/20, A23L 3/3472, A23L 3/349, A23L 3/3499, A23L 2/44

(54) **PRESERVATIVE COMPOSITION FOR A FOODSTUFF**
KONSERVIERUNGSZUSAMMENSETZUNG FÜR EIN NAHRUNGSMITTEL
COMPOSITION DE CONSERVATION D'ALIMENTS

(30) Priority: 14.02.2019 EP 19157108
(43) Date of publication of application: 22.12.2021
(73) Proprietor: Unilever IP Holdings B.V., 3013 AL Rotterdam (NL)
(72) Inventor: MYCOCK, Gary, Sharnbrook Bedford Bedfordshire MK44 1LQ (GB); SIMONS, Elizabeth-Ann, Sharnbrook Bedford Bedfordshire MK44 1LQ (GB)
(74) Representative: Warner, Guy Jonathan
(86) International application number: PCT/EP2020/051531
(87) International publication number: WO 2020/164874

(56) References cited:
- WO-A1-01/87095
- US-A1- 2007 160 737
- R Rivola ET AL: "Non conventional antimicrobial substances in tea-based soft-drinks", Industrie delle Bevande, 1 January 2000 (2000-01-01), pages 129-136, XP055606956, Retrieved from the Internet: URL:https://www.cabdirect.org/cabdirect/ab stract/20001416134 [retrieved on 2019-07-18]
- ZHENG-ZHU ZHANG ET AL: "Antifungal Activities of Major Tea Leaf Volatile Constituents toward Colletorichum camelliae Massea", JOURNAL OF AGRICULTURAL AND FOOD CHEMISTRY, vol. 54, no. 11, 1 May 2006 (2006-05-01), pages 3936-3940, XP055052653, ISSN: 0021-8561, DOI: 10.1021/jf060017m
- SOICHIRO NAKAMURA ET AL: "Green-Leaf-Derived C6-Aroma Compounds with Potent Antibacterial Action That Act on Both Gram-Negative and Gram-Positive Bacteria", JOURNAL OF AGRICULTURAL AND FOOD CHEMISTRY, vol. 50, no. 26, 1 December 2002 (2002-12-01), pages 7639-7644, XP055385076, US ISSN: 0021-8561, DOI: 10.1021/jf025808c
- N. BELLETTI ET AL: "Antimicrobial Activity of Aroma Compounds against Saccharomyces cerevisiae and Improvement of Microbiological Stability of Soft Drinks as Assessed by Logistic Regression", APPLIED AND ENVIRONMENTAL MICROBIOLOGY, vol. 73, no. 17, 6 July 2007 (2007-07-06), pages 5580-5586, XP055252151, US ISSN: 0099-2240, DOI: 10.1128/AEM.00351-07
- WANG BING ET AL: "Essential oils and ethanol extract fromCamellia nitidissimaand evaluation of their biological activity", JOURNAL OF FOOD SCIENCE AND TECHNOLOGY, SPRINGER (INDIA) PRIVATE LTD, INDIA, vol. 55, no. 12, 6 October 2018 (2018-10-06), pages 5075-5081, XP036634245, ISSN: 0022-1155, DOI: 10.1007/S13197-018-3446-X [retrieved on 2018-10-06]

## Description

### Field of the invention

The present invention relates to a preservative composition, and to a preserved foodstuff comprising the preservative composition.

### Background of the invention

Spoilage caused by a variety of microorganisms is one reason for food wastage. Spoilage is the process by which food deteriorates such that its edibility becomes reduced, ultimately resulting in the food becoming inedible to humans.

Moulds and/or yeasts growing on or within the food matrix may be responsible for food spoilage. Bacteria can also be responsible for food spoilage. Acids and metabolites are typically created in the processes by which bacteria break down food - even if the bacteria themselves are not harmful, the waste products may be unpleasant to taste or may even be harmful to health.

Consumers increasingly want convenience food to stay fresh and have a prolonged shelf life. Addition of preservatives to foodstuffs (such as beverages, spreads, dressings, convenience food, and so forth) is common practice in the food industry. The market for preservatives is growing in line with consumer demand.

Many countries have regulations that prohibit the use of certain food additives, including some preservatives, in foods and beverages. Although such regulations can vary widely, there is a clear trend for foods to contain fewer and lower levels of chemical preservatives, particularly synthetic ones.

R Rivola et al, Industrie delle Bevande, 1 January 2000 (2000-01-01), pages 129-136 is entitled "Non conventional antimicrobial substances in tea-based soft-drinks". Zheng-Zhu Zhang et al, Journal of Agricultural and Food Chemistry, vol. 54, no. 11, 1 May 2006, pages 3936-3940 is entitled "Antifungal Activities of Major Tea Leaf Volatile Constituents toward Colletorichum camelliae Massea". Soichiro Nakamura et al, Journal of Agricultural and Food Chemistry, vol. 50, no. 26, 1 December 2002, pages 7639-7644 is entitled "Green-Leaf-Derived C6-Aroma Compounds with Potent Antibacterial Action That Act on Both GramNegative and Gram-Positive Bacteria".

Frequently used preservatives in food products include sorbates and benzoates. Unfortunately, the use of such preservatives can often impair the flavour of certain foodstuffs. Furthermore, some consumers view these preservatives as the sort of chemical additives they would rather avoid. Indeed, there is a growing consumer trend for so-called "clean label" food products.

However, it is difficult to replace existing preservatives with "clean label" alternatives. In particular the replacement of sorbates is challenging, since many of the "natural" alternatives do not have a sufficient degree of anti-fungal activity.

Accordingly, there is a need for a "clean label" preservative composition which would provide the beneficial qualities of sorbates, particularly in terms of anti-fungal activity. Similarly, the formulation of foodstuffs that have low levels of synthetic preservatives would also be desirable.

### Summary of the invention

The inventors have identified that a specific combination of volatile aroma compounds has antimicrobial activity. Thus, in a first aspect, the invention provides a preservative composition consisting of at least 3 compounds selected from: hexanal, E-2-hexenal, E-2-hexenol, E-linalool oxide, methanol and methyl salicylate wherein the preserved foodstuff comprises less than 60 ppm linalool.

The invention also provides a preserved foodstuff comprising this preservative composition, and a method for preparing a preserved foodstuff comprising adding the preservative composition to a foodstuff that is susceptible to microbial spoilage.

The use of a composition comprising at least 3 compounds selected from: hexanal, E-2-hexenal, E-2-hexenol, E-linalool oxide, methanol and methyl salicylate as a preservative, and particularly to such a use wherein the composition reduces or prevents the proliferation of one or more fungal spoilage microorganism(s) in a foodstuff is disclosed but not claimed herein.

### Detailed description of the invention

The present invention relates to a preservative composition consisting of at least 3 compounds, preferably at least 4 compounds, more preferably at least 5 compounds, selected from: hexanal, E-2-hexenal, E-2-hexenol, E-linalool oxide, methanol and methyl salicylate, wherein the preserved foodstuff comprises less than 60 ppm linalool, and also to a preserved foodstuff comprising such a preservative composition. Preferably, the preservative composition consists of E-2-hexenal and at least 2 compounds, more preferably at least 3 compounds, still more preferably at least 4 compounds selected from: hexanal, E-2-hexenol, E-linalool oxide, methanol and methyl salicylate.

The preservative composition of the present invention can consist of hexanal, E-2-hexenal, E-2-hexenol, E-linalool oxide, methanol and methyl salicylate. Similarly, the preserved foodstuff can comprise a preservative system consisting of hexanal, E-2-hexenal, E-2-hexenol, E-linalool oxide, methanol and methyl salicylate.

A successful preservative composition inhibits spoilage microorganisms without interfering with the sensorial properties of the foodstuff. It is preferred that the preserved foodstuff comprises 10 ppm to 10000 ppm of the preservative composition, more preferably 50 ppm to 5000 ppm, most preferably 100 ppm to 2500 ppm. The specified concentrations relate to the level of the preservative composition present in the end product as stored (i.e. the level found in the preserved foodstuff). It should be noted that this will not necessarily be the level in the foodstuff as consumed, since some foodstuffs are sold in a concentrated format, and will be diluted prior to consumption. Thus it is possible that the foodstuff as consumed may have a lower concentration of the preservative composition than the foodstuff as stored.

The present inventors have found that the presence of linalool in the preserved foodstuff tends to inhibit the effectiveness of the preservative composition. Therefore the preserved foodstuff comprises less than 60 ppm linalool, more preferably less than 30 ppm linalool, and still more preferably less than 15 ppm linalool. It is particularly preferred that the preserved foodstuff is substantially free of linalool. Once again, these concentrations relate to the level in the preserved foodstuff as stored.

In designing foodstuffs which are protected against spoilage, some of the more commonly used preservatives are sorbates. As used herein the term "sorbates" includes sorbic acid (E200) and salts thereof - including sodium sorbate (E201), potassium sorbate (E202), and calcium sorbate (E203). Sorbates are particularly effective anti-fungal agents, and finding "natural" replacements has been a challenge. We have found that the preservative composition of the present invention can be used to fully or partially replace sorbates in a foodstuff. For example, such a preservative composition may allow the use of reduced levels of sorbates in a foodstuff (while still achieving the same anti-spoilage effect as the conventional full dose of sorbates). A typical amount of potassium sorbate in foodstuffs is from 250 ppm to 1000 ppm. Thus, the foodstuff according to the present invention preferably comprises less than 200 ppm sorbates, more preferably less than 100 ppm sorbates, still more preferably less than 50 ppm sorbates, and most preferably less than 10 ppm sorbates.

Benzoates represent another class of commonly used preservatives, particularly in acidic foods such as salad dressings and soft drinks. We have found that the preservative composition of the present invention can be used to fully or partially replace benzoates in a foodstuff. For example, the preservative composition may allow the use of reduced levels of benzoates in a foodstuff (while still achieving the same anti-spoilage effect as the conventional full dose of sorbates). As used herein the term "benzoates" includes benzoic acid (E210) and salts thereof - including sodium benzoate (E211), potassium benzoate (E212), and calcium benzoate (E213). A typical amount of sodium benzoates in foodstuffs is from 150 ppm to 1000 ppm. Thus, the foodstuff according to the present invention preferably comprises less than 500 ppm benzoates, more preferably less than 100 ppm benzoates, still more preferably less than 50 ppm benzoates, and most preferably less than 10 ppm benzoates.

The foodstuff of the present invention is a foodstuff that is sensitive to spoilage. The foodstuff is preferably selected from group consisting of: beverages (including still or carbonated soft drinks, fruit drinks, beverage concentrates, multiserve cordials, energy drinks, flavoured water, nectars, sports drinks), sauces, dressings, marinades, ketchups, seasonings, bouillons, soups, desserts, confectionary products and ice cream.

The preserved foodstuff is preferably packaged. Non-limiting examples of suitable packages include bottles, cans, cartons, pouches and sachets. The preserved foodstuff is preferably sanitised, e.g. by pasteurisation or sterilisation.

Examples of foodstuffs in which the preservative composition may be incorporated include packaged ready-to-drink beverages or packaged beverage concentrates. The preservative composition is especially suitable for incorporation in tea-based beverages. However, other beverages including fruit drinks and soft drinks can also be stabilised using the preservative composition. The beverage may be still or carbonated.

Where the beverage is a tea-based beverage it will contain tea solids. The tea solids can be provided by any suitable source, e.g. a tea extract (preferably in a powder format), a pressed tea juice, *etc.* The skilled person knows how to obtain such source materials.

Tea is known to have certain antimicrobial properties in itself, however this property (i.e. suppression of the growth of yeasts and moulds) is only evident once the concentration of tea solids exceeds 3%. At concentrations lower than this, which are typical for tea-based beverages (including tea concentrates), the tea acts as a nutrient that enhances the potential for microbial spoilage. The beverage preferably comprises 0.01% to 3% tea solids by weight of the beverage, more preferably 0.05% to 3%, most preferably 0.1 % to 2%. As used herein the term "tea solids" refers to dry material obtainable from the leaves of the plant *Camellia sinensis* var. *sinensis* and/or *Camellia sinensis* var. *assamica.*

As used herein the term "beverage" refers to a substantially aqueous composition. The beverage may be in any format. For example, it may be in a ready-to-drink format or a concentrated format. A "ready-to-drink beverage" refers to a drinkable composition suitable for direct human consumption, and preferably comprises at least 85% water by weight, more preferably at least 90%, and most preferably at least 95%.

A "beverage concentrate" refers to a beverage composition which typically requires dilution with an aqueous liquid (e.g. water or milk) prior to consumption, as such this format will typically have a higher solids content (and thus a lower water content) than a ready-to-drink format. For example, prior to dilution the beverage concentrate preferably comprises at least 25% to 85% water by weight, more preferably 40% to 80%, and most preferably at least 50% to 75%.

It is preferred that the preserved beverage has an acidic pH (i.e a pH of less than 7). In particular the pH (at 20°C) is preferably less than 5, more preferably less than 4.5 and most preferably from 2 to 4.

In order to achieve an acidic pH, the preserved beverage preferably comprises one or more acidulant. Suitable acidulants include organic acids such as citric acid, malic acid, lactic acid, tartaric acid, ascorbic acid, phosphoric acid, and salts thereof. Mixtures of one or more of these acidulants are also suitable. A particularly well-balance flavour may be provided when the acidulant comprises citric acid and/or a salt thereof. Mixtures of citric acid (and/or its salt), malic acid (and/or its salt), and ascorbic acid (and/or its salt) also provide good flavour. Typically, the concentration of the acidulant in the preserved beverage will be from 0.001 to 1% by weight, more preferably from 0.01 to 0.5% by weight.

It is particularly preferred that the preserved beverage is a flavoured beverage, more preferably a fruit-flavoured beverage, and most preferably a fruit-flavoured tea beverage. Suitable flavours include natural or synthetic fruit flavours, and/or natural or synthetic herb flavours. Examples of fruit flavours include: apple, apricot, blackcurrant, cherry, cranberry, grape, grapefruit, guava, kiwi, lemon, lime, lychee, mandarin, mango, nectarine, orange, peach, pear, pineapple, plum, passion fruit, raspberry, and strawberry. Examples of herb flavours include: chamomile, chrysanthemum, elderflower, hawthorn, hibiscus, jasmine, mate, mint (e.g. peppermint, spearmint), osmanthus, rose, and verbena (e.g. lemon verbena).

Consumers prefer beverages with a sweet taste. Therefore, the preserved beverage preferably comprises nutritive sweetener, non-nutritive sweetener, or mixtures thereof.

Non-nutritive sweeteners allow beverages to be formulated that have a low energy content, and yet still taste pleasantly sweet. Health-conscious consumers often prefer such beverages. Preferred examples of non-nutritive sweeteners include aspartame, saccharin, acesulfame K, glycyrrhizin, stevia-derived sweetening agents (for example: stevioside, rebaudioside A, rebaudioside C, ducloside A; preferred examples being stevioside and/or rebaudioside), sucralose, and mixtures thereof. Owing to their well-rounded flavour, the most preferred non-nutritive sweeteners are acesulfame K, aspartame, sucralose, rebaudioside A, or mixtures thereof. The concentration of non-nutritive sweetener will depend on the relative sweetness of the sweetener, and the composition of the beverage. Typically, the preserved beverage will comprise non-nutritive sweetener in an amount of 0.00001 to 10% by weight of the beverage, more preferably 0.001 to 1% by weight and most preferably 0.01 to 0.1% by weight.

On the other hand, consumers may prefer the perceived naturalness of nutritive sweeteners. Examples of nutritive sweeteners include glucose, sucrose, fructose, and mixtures thereof. A particularly preferred example of a natural nutritive sweetener is honey.

The preserved beverage may have a high calorie content (e.g. have an energy content of more than 100 kCal per 100 g of the beverage, preferably between 150 and 1000 kCal). Such beverages preferably comprise one or more nutritive sweetener(s), optionally in combination with one or more non-nutritive sweetener(s).

In one preferred embodiment, the preserved beverage is a low-calorie beverage (e.g. having an energy content of less than 100 kCal per 100g of the beverage). It is particularly preferred that a single serving of the preserved beverage has a total energy content of less than 10 kCal, more preferably less than 5 kCal, most preferably less than 1 kCal. Low calorie beverages preferably comprise one or more non-nutritive sweetener(s).

Although the preserved foodstuff may be manufactured in any convenient manner, the method according to the invention is preferably used. As set out above, one aspect of the invention relates to a method for preparing a preserved foodstuff comprising adding a preservative composition consisting of at least 3 compounds selected from: hexanal, E-2-hexenal, E-2-hexenol, E-linalool oxide, methanol and methyl salicylate to a foodstuff that is susceptible to microbial spoilage, wherein the preserved foodstuff comprises less than 60 ppm linalool. The foodstuff that is susceptible to microbial spoilage is preferably a beverage.

Preferably, the preservative composition is added to the foodstuff in an amount such that the foodstuff comprises 10 ppm to 10000 ppm of the preservative composition, more preferably 50 ppm to 5000 ppm, most preferably 100 ppm to 2500 ppm.

The method is preferably used to prepare the preserved foodstuff described above, and consequently the preferred technical features described for the preserved foodstuff also apply *mutatis mutandis* to the method.

The use of a composition comprising at least 3 compounds selected from: hexanal, E-2-hexenal, E-2-hexenol, E-linalool oxide, methanol and methyl salicylate as a preservative. For example, the use of such a composition to reduce or prevent the proliferation of one or more fungal spoilage microorganism(s) in a foodstuff, preferably a beverage is disclosed but not claimed herein.

As used herein the term "comprising" encompasses the terms "consisting essentially of" and "consisting of". Where the term "comprising" is used, the listed steps or options need not be exhaustive. Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

Unless otherwise specified, numerical ranges expressed in the format "from x to y" are understood to include x and y. In specifying any range of values or amounts, any particular upper value or amount can be associated with any particular lower value or amount. All percentages and ratios contained herein are calculated by weight unless otherwise indicated.

The various features of the present invention referred to in individual sections above apply, as appropriate, to other sections *mutatis mutandis.* Consequently features specified in one section may be combined with features specified in other sections as appropriate. Any section headings are added for convenience only, and are not intended to limit the disclosure in any way.

The following examples are intended to illustrate the invention and are not intended to limit the invention to those examples *per se.*

### Examples

Combinations of aroma molecules were tested for growth inhibition of some common fungal spoilage microorganisms.

A cold-filled, non-preserved peach flavoured tea concentrate was used as the culture medium. This tea concentrate contained black tea extract powder (8.4 g/L), flavour (5.04 g/L), sucrose (444 g/L), citric acid (11.7 g/L), ascorbic acid (1.2 g/L) and water (balance).

The culture medium was spiked, either with an inoculum consisting of a cell suspension of two yeasts *(Candida parapsilosis* and *Zygosaccharomyces bailii*) or with an inoculum consisting of a cell suspension of two moulds *(Paecilomyces variotti* and *Neosartorya fischeri).* In either case, the culture medium was spiked at a level of around 1000 cfu/ml. All samples and controls for each time point were prepared in triplicate.

The samples were incubated at 25°C, and the cultivation period was between 1 and 12 weeks. At each time point, serial dilutions of each sample and control were plated on OMEA plates. The diluent for the serial dilutions was MRD, and a minimum of 3 dilutions were plated out for each sample and control at each time point. The plates were incubated at 25°C for 3 to 5 days, and growth of spoilage microorganisms was determined visually.

### Example 1

Aroma composition stock solutions were prepared. Table 1 summarises the aroma compounds present in four such aroma composition stock solutions (Samples 1 to 5). The concentration of the compounds (where present) in each of the aroma composition stock solutions was as follows: methanol (12900 ppm), E-2-hexenal (6280 ppm), linalool (3170 ppm), Z-3-hexenol (1070 ppm), E-linalool oxide (973 ppm), methyl salicylate (833 ppm), hexanal (509 ppm), E-2-hexenol (492 ppm), acetaldehyde (365 ppm), Z-2-penten-1-ol (344 ppm), 1-penten-3-ol (251 ppm), 1-penten-3-one (107 ppm).

For the fungal growth inhibition studies, the appropriate stock solution was diluted in the culture media (i.e. non-preserved peach flavoured tea concentrate) such that the culture media contained 2% (by volume) of the applicable aroma composition. In each study, the appropriate controls were included. These controls were as follows:
Control 1: positive control (i.e. culture medium without any aroma composition spiked with the inoculum);
Control 2: negative control (i.e. unspiked culture medium containing 2% aroma composition); and
Control 3: sterility control (i.e. unspiked culture medium without any aroma composition).

**Table 1: aroma compositions (samples 1 to 5**

| **Compound** | **Sample 1** | **Sample 2** | **Sample 3** | **Sample 4** | **Sample 5** |
|---|---|---|---|---|---|
| Methanol | Y | Y | - | Y | Y |
| E-2-hexenal | Y | Y | - | Y | Y |
| Linalool | Y | - | Y | - | Y |
| Z-3-hexenol | Y | Y | - | - | - |
| E-linalool oxide | Y | Y | - | Y | Y |
| Methyl salicylate | Y | Y | - | Y | Y |
| Hexanal | Y | Y | - | Y | Y |
| E-2-hexenol | Y | Y | - | Y | Y |
| Acetaldehyde | Y | Y | - | - | - |
| Z-2-penten-1-ol | Y | Y | - | - | - |
| 1-penten-3-ol | Y | Y | - | - | - |
| 1-penten-3-one | Y | Y | - | - | - |

The results of the fungal growth inhibition studies are summarised in Table 2. The data is from the 1 in 10 serial dilution, and is the mean of the triplicate samples.

With regard to the controls, the positive control (Control 1) resulted in >300 cfu/ml at all time points regardless of the inoculum used. Both the negative control (Control 2) and the sterility control (Control 3) resulted in <1 cfu/ml at all time points (data not included in Table 2).

The samples containing all 6 of hexanal, E-2-hexenal, E-2-hexenol, E-linalool oxide, methanol and methyl salicylate (i.e. Samples 1, 2, 4 and 5) all show at least some anti-fungal activity against both yeasts and moulds. Whereas Sample 3 (linalool only) did not show anti-fungal activity against yeasts or moulds.

It is apparent that the samples which contain the 6 listed compounds and linalool (i.e. Samples 1 and 5) are less effective long-term anti-fungal agents, and are most effective for periods of less than a month. In contrast, the samples which the 6 listed compounds without linalool (i.e. Samples 2 and 4) show long-term anti-fungal activity, with Sample 4 showing anti-fungal activity against both yeasts and moulds for at least 12 weeks.

**Table 2: results of fungal growth inhibition study**

| **Sample ID** | **Cultivation period (weeks)** | **Fungal growth (cfu/ml)** | |
|---|---|---|---|
| | | **Mould inoculum** | **Yeast inoculum** |
| **Sample 1** | 1 | <1 | <1 |
| | 2 | <1 | <1 |
| | 3 | <1 | <1 |
| | 4 | >300 | <1 |
| | 7 | >300 | <1 |
| | 12 | >300 | - |
| **Sample 2** | 1 | <1 | <1 |
| | 2 | <1 | 4 |
| | 3 | <1 | 4 |
| | 4 | <1 | 3.3 |
| | 7 | <1 | <1 |
| | 12 | >300 | 4.7 |
| **Sample 3** | 1 | >300 | >300 |
| | 2 | >300 | >300 |
| | 3 | >300 | >300 |
| | 4 | >300 | >300 |
| | 7 | >300 | >300 |
| | 12 | >300 | >300 |
| **Sample 4** | 1 | <1 | <1 |
| | 2 | <1 | <1 |
| | 3 | <1 | <1 |
| | 4 | <1 | <1 |
| | 7 | <1 | <1 |
| | 12 | <1 | <1 |
| **Sample 5** | 1 | <1 | <1 |
| | 2 | <1 | <1 |
| | 3 | <1 | <1 |
| | 4 | <1 | 82.3 |
| | 7 | <1 | 8.3 |
| | 12 | 3 | >300 |
| **Control 1** | 1 | >300 | >300 |
| | 2 | >300 | >300 |
| | 3 | >300 | >300 |
| | 4 | >300 | >300 |
| | 7 | >300 | >300 |
| | 12 | >300 | >300 |

### Example 2

The anti-fungal properties of the 6 compounds in Sample 5 were investigated further. Table 3 summarises 15 further aroma composition stock solutions (Samples A to O) - each containing one or two of these compounds. The concentration of the compounds (where present) in each of the aroma composition stock solutions was as follows: methanol (12900 ppm), E-2-hexenal (6280 ppm), E-linalool oxide (973 ppm), methyl salicylate (833 ppm), hexanal (509 ppm), E-2-hexenol (492 ppm).

**Table 3: aroma compositions (samples A to O)**

| **Sample** | **Compound** | | | | | |
|---|---|---|---|---|---|---|
| | Methanol | Hexanal | E-linalool oxide | Methyl salicylate | E-2-hexenol | E-2-hexenal |
| Sample A | Y | | | | | |
| Sample B | Y | Y | | | | |
| Sample C | Y | | Y | | | |
| Sample D | Y | | | Y | | |
| Sample E | Y | | | | Y | |
| Sample F | Y | | | | | Y |
| Sample G | | Y | | | | |
| Sample H | | Y | Y | | | |
| Sample I | | Y | | Y | | |
| Sample J | | Y | | | Y | |
| Sample K | | Y | | | | Y |
| Sample L | | | Y | | | |
| Sample M | | | Y | Y | | |
| Sample N | | | Y | | Y | |
| Sample O | | | Y | | | Y |

Once again, the appropriate stock solution was diluted in the culture media (i.e. non-preserved peach flavoured tea concentrate) such that the culture media contained 2% (by volume) of the applicable aroma composition. A yeast inoculum was used for this study. The appropriate controls (positive, negative and sterility controls) were included. The positive control resulted in >300 cfu/ml at all time points, whilst both the negative control and the sterility control resulted in <1 cfu/ml at all time points.

All of the samples containing only a single compound (i.e. Samples A, G and L) resulted in >300 cfu/ml - even after 1 week. Of the samples containing pairs of compounds, only Samples E, I, J and K showed any appreciable anti-fungal activity after 1 week. None of the samples containing pairs of compounds showed significant anti-fungal activity after 2 weeks. Therefore, it was hypothesised that anti-fungal activity required at least 3 of the compounds to be present.

### Example 3

The anti-fungal properties of further combinations of the compounds in Sample 5 were investigated. Table 4 summarises 3 further aroma composition stock solutions (Samples 6 to 8) - each containing 3 of these compounds. The concentration of the compounds (where present) in each of the aroma composition stock solutions was as follows: E-2-hexenal (628000 ppm), E-linalool oxide (973 ppm), methyl salicylate (833 ppm), hexanal (509 ppm).

**Table 4: aroma compositions (samples 6 to 8)**

| **Sample** | **Compound** | | | |
|---|---|---|---|---|
| | Hexanal | E-linalool oxide | Methyl salicylate | E-2-hexenal |
| Sample 6 | Y | | Y | Y |
| Sample 7 | | Y | Y | Y |
| Sample 8 | Y | | Y | Y |

Once again, the appropriate stock solution was diluted in the culture media (i.e. non-preserved peach flavoured tea concentrate) such that the culture media contained 2% (by volume) of the applicable aroma composition. The culture medium was spiked, either with yeast inoculum or a mould inoculum. The appropriate controls (positive, negative and sterility controls) were included. The positive control resulted in >300 cfu/ml at all time points regardless of the inoculum used, whilst both the negative control and the sterility control resulted in <10 cfu/ml at all time points.

All of the Samples 6 to 8 showed anti-fungal activity after 6 weeks (i.e. <10 cfu/ml). This confirmed the hypothesis that anti-fungal activity required at least 3 of the compounds to be present.

## Claims

1. Preserved foodstuff comprising a preservative composition, the preservative composition consisting of at least 3 compounds selected from: hexanal, E-2-hexenal, E-2-hexenol, E-linalool oxide, methanol and methyl salicylate, wherein the preserved foodstuff comprises less than 60 ppm linalool.

2. Preserved foodstuff as claimed in claim 1 wherein the preservative composition consists of E-2-hexenal and at least 2 compounds selected from: hexanal, E-2-hexenol, E-linalool oxide, methanol and methyl salicylate.

3. Preserved foodstuff as claimed in claim 1 or claim 2 wherein the preserved foodstuff comprises 10 ppm to 10000 ppm of the preservative composition.

4. Preserved foodstuff as claimed any one of claims 1 to 3 wherein the preserved foodstuff comprises less than 200 ppm sorbates, preferably less than 100 ppm sorbates.

5. Preserved foodstuff as claimed in any one of claims 1 to 4 wherein the preserved foodstuff comprises less than 100 ppm benzoates, preferably less than 50 ppm benzoates.

6. Preserved foodstuff as claimed in any one of claims 1 to 5 wherein the preserved foodstuff is a beverage, preferably a packaged ready-to-drink beverage or a packaged beverage concentrate.

7. Preserved beverage as claimed in claim 6 wherein the beverage comprises 0.05 to 3 wt.% tea solids.

8. Preserved beverage as claimed in claim 6 or claim 7 wherein the beverage is a flavoured beverage comprising natural or synthetic fruit flavours and/or natural or synthetic herb flavours.

9. Preserved beverage as claimed in any one of claims 6 to 8 wherein the beverage is an acidic beverage, preferably having a pH of 2 to 6, more preferably 2 to 5.

10. Method for preparing a preserved foodstuff, the method comprising adding the preservative composition as claimed in claim 1 or claim 2 to a foodstuff, preferably a beverage, that is susceptible to microbial spoilage, wherein the preserved foodstuff comprises less than 60 ppm linalool.

11. Method as claimed in claim 10 wherein the preservative composition is added to the foodstuff in an amount such that the foodstuff comprises 10 ppm to 10000 ppm of the preservative composition.

## Patentansprüche

1. Konserviertes Nahrungsmittel, umfassend eine Konservierungszusammensetzung, wobei die Konservierungszusammensetzung aus mindestens 3 Verbindungen besteht, ausgewählt aus Hexanal, E-2-Hexenal, E-2-Hexenol, E-Linalooloxid, Methanol und Methylsalicylat, wobei das konservierte Nahrungsmittel weniger als 60 ppm Linalool umfasst.

2. Konserviertes Nahrungsmittel, wie im Anspruch 1 beansprucht, wobei die Konservierungszusammensetzung aus E-2-Hexenal und mindestens 2 Verbindungen, ausgewählt aus Hexanal, E-2-Hexenol, E-Linalooloxid, Methanol und Methylsalicylat, besteht.

3. Konserviertes Nahrungsmittel, wie im Anspruch 1 oder Anspruch 2 beansprucht, wobei das konservierte Nahrungsmittel 10 ppm bis 10000 ppm der Konservierungszusammensetzung umfasst.

4. Konserviertes Nahrungsmittel, wie in irgendeinem der Ansprüche 1 bis 3 beansprucht, wobei das konservierte Nahrungsmittel weniger als 200 ppm Sorbate, vorzugsweise weniger als 100 ppm Sorbate, umfasst.

5. Konserviertes Nahrungsmittel, wie in irgendeinem der Ansprüche 1 bis 4 beansprucht, wobei das konservierte Nahrungsmittel weniger als 100 ppm Benzoate, vorzugsweise weniger als 50 ppm Benzoate, umfasst.

6. Konserviertes Nahrungsmittel, wie in irgendeinem der Ansprüche 1 bis 5 beansprucht, wobei das konservierte Nahrungsmittel ein Getränk, vorzugsweise ein verpacktes trinkfertiges Getränk oder ein verpacktes Getränkekonzentrat ist.

7. Konserviertes Nahrungsmittel, wie im Anspruch 6 beansprucht, wobei das Getränk 0,05 bis 3 Gew.-% Teefeststoffe umfasst.

8. Konserviertes Getränk, wie in Anspruch 6 oder Anspruch 7 beansprucht, wobei das Getränk ein aromatisiertes Getränk ist, umfassend natürliche oder synthetische Fruchtaromen und/oder natürliche oder synthetische Kräuteraromen.

9. Konserviertes Getränk, wie in irgendeinem der Ansprüche 6 bis 8 beansprucht, wobei das Getränk ein saures Getränk ist, das vorzugsweise einen pH-Wert von 2 bis 6, bevorzugter von 2 bis 5, aufweist.

10. Verfahren zur Herstellung eines konservierten Nahrungsmittels, wobei das Verfahren das Zugeben der Konservierungszusammensetzung, wie im Anspruch 1 oder Anspruch 2 beansprucht, zu einem Nahrungsmittel umfasst, vorzugsweise zu einem Getränk, das für mikrobiologischen Verderb anfällig ist, wobei das konservierte Nahrungsmittel weniger als 60 ppm Linalool umfasst.

11. Verfahren, wie im Anspruch 10 beansprucht, wobei die Konservierungszusammensetzung zu dem Nahrungsmittel in einer solchen Menge gegeben wird, dass das Nahrungsmittel 10 ppm bis 10000 ppm der Konservierungszusammensetzung umfasst.

## Revendications

1. Produit alimentaire conservé comprenant une composition de conservateur, la composition de conservateur consistant en au moins 3 composés choisis parmi : hexanal, E-2-hexénal, E-2-hexénol, oxyde de E-linalool, méthanol et salicylate de méthyle, dans lequel le produit alimentaire conservé comprend moins de 60 ppm de linalool.

2. Produit alimentaire conservé selon la revendication 1, dans lequel la composition de conservateur consiste en E-2-hexénal et au moins 2 composés choisis parmi : hexanal, E-2-hexénol, oxyde de E-linalool, méthanol et salicylate de méthyle.

3. Produit alimentaire conservé selon la revendication 1 ou revendication 2, dans lequel le produit alimentaire conservé comprend de 10 ppm à 10 000 ppm de la composition de conservateur.

4. Produit alimentaire conservé selon l'une quelconque des revendications 1 à 3, dans lequel le produit alimentaire conservé comprend moins de 200 ppm de sorbates, de préférence moins de 100 ppm de sorbates.

5. Produit alimentaire conservé selon l'une quelconque des revendications 1 à 4, dans lequel le produit alimentaire conservé comprend moins de 100 ppm de benzoates, de préférence moins de 50 ppm de benzoates.

6. Produit alimentaire conservé selon l'une quelconque des revendications 1 à 5, dans lequel le produit alimentaire conservé est une boisson, de préférence une boisson prête à être bue emballée ou un concentré de boisson emballé.

7. Boisson conservée selon la revendication 6, dans laquelle la boisson comprend de 0,05 à 3 % en masse de solides de thé.

8. Boisson conservée selon la revendication 6 ou revendication 7, dans laquelle la boisson est une boisson aromatisée comprenant des arômes de fruits naturels ou synthétiques et/ou des arômes d'herbes naturels ou synthétiques.

9. Boisson conservée selon l'une quelconque des revendications 6 à 8, dans laquelle la boisson est une boisson acide, ayant de préférence un pH de 2 à 6, encore mieux de 2 à 5.

10. Procédé pour la préparation d'un produit alimentaire conservé, le procédé comprenant l'addition de la composition de conservateur selon la revendication 1 ou revendication 2 à un produit alimentaire, de préférence une boisson, qui est susceptible d'une détérioration microbienne, dans lequel le produit alimentaire conservé comprend moins de 60 ppm de linalool.

11. Procédé selon la revendication 10, dans lequel la composition de conservateur est ajoutée au produit alimentaire dans une quantité telle que le produit alimentaire comprend de 10 ppm à 10 000 ppm de la composition de conservateur.
